# EUROPEAN PATENT SPECIFICATION

(11) **EP 4 301 083 B1**
(45) Date of publication and mention of the grant of the patent: **31.12.2025**
(21) Application number: 22781722.8
(22) Date of filing: 04.04.2022
(51) Int. Cl.: H04W 48/18, H04W 60/04, H04W 60/00

(54) **METHOD AND DEVICE FOR MANAGING BACKHAUL INFORMATION-BASED SESSION IN WIRELESS COMMUNICATION SYSTEM**
VERFAHREN UND VORRICHTUNG ZUR VERWALTUNG EINER BACKHAUL-INFORMATIONSBASIERTEN SITZUNG IN EINEM DRAHTLOSKOMMUNIKATIONSSYSTEM
PROCÉDÉ ET DISPOSITIF DE GESTION DE SESSIONS SUR LA BASE D'INFORMATIONS DE LIAISON D'AMENÉE DANS UN SYSTÈME DE COMMUNICATION SANS FIL

(30) Priority: 02.04.2021 KR 20210043506
(43) Date of publication of application: 03.01.2024
(73) Proprietor: Samsung Electronics Co., Ltd., Suwon-si, Gyeonggi-do 16677 (KR)
(72) Inventor: KIM, Dongyeon, Suwon-si, Gyeonggi-do 16677 (KR)
(74) Representative: Gulde & Partner
(86) International application number: PCT/KR2022/004804
(87) International publication number: WO 2022/211603

(56) References cited:
- US-A1- 2021 051 444
- "3rd Generation Partnership Project; Technical Specification Group Services and System Aspects; Study on architecture aspects for using satellite access in 5G (Release 17)", 3 July 2020 (2020-07-03), XP051906993, Retrieved from the Internet <URL:https://ftp.3gpp.org/tsg_sa/WG2_Arch/Latest_SA2_Specs/DRAFT_INTERIM/23737-h10_CRs_Implemented.zip 23737-h10_CRs_Implemented.docx> [retrieved on 20200703]
- CATT: "A combined solution for key issue 5", vol. SA WG2, no. Split, Croatia; 20191014 - 20191018, 3 October 2019 (2019-10-03), XP051801678, Retrieved from the Internet <URL:https://ftp.3gpp.org/Meetings_3GPP_SYNC/SA2/Docs/S2-1909477.zip S2-1909477_A combined solution for key issue 5.docx> [retrieved on 20191003]
- CATT ZTE CHINA MOBILE: "Discussion on Satellite Backhaul", vol. SA WG2, no. 20210224 - 20210309, 18 February 2021 (2021-02-18), XP052172970, Retrieved from the Internet <URL:https://ftp.3gpp.org/tsg_sa/WG2_Arch/TSGS2_143e_Electronic/Docs/S2-2100644.zip S2-2100644_Discussion on satellite backhaul_v3.pptx> [retrieved on 20210218]
- TNO ET AL: "Combined solution for key issue 5", vol. SA WG2, no. Split, Croatia; 20191014 - 20191018, 28 October 2019 (2019-10-28), XP051813288, Retrieved from the Internet <URL:https://ftp.3gpp.org/tsg_sa/WG2_Arch/TSGS2_135_Split/Docs/S2-1910791.zip S2-1910791_e-mail_rev1_S2-1910526.docx> [retrieved on 20191028]
- THALES S A: "Removal of EN in clause 6.5.1 (KI 5)", vol. SA WG2, no. Reno, Nevada, USA; 20191118 - 20191122, 19 November 2019 (2019-11-19), XP051826298, Retrieved from the Internet <URL:https://ftp.3gpp.org/Meetings_3GPP_SYNC/SA2/Docs/S2-1912041.zip S2-1912041 was S2-1910930 23.737 Removal of EN in Clause 6.5.1 for KI 5.doc> [retrieved on 20191119]
- CATT ZTE CHINA MOBILE: "Discussion on Satellite Backhaul", 3GPP DRAFT; S2-2100644, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. 20210224 - 20210309, 18 February 2021 (2021-02-18), Mobile Competence Centre ; 650, route des Lucioles ; F-06921 Sophia-Antipolis Cedex ; France, XP052172970
- "3rd Generation Partnership Project; Technical Specification Group Services and System Aspects; Procedures for the 5G System (5GS); Stage 2 (Release 17)", 3GPP STANDARD; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V17.0.0, 31 March 2021 (2021-03-31), Mobile Competence Centre ; 650, route des Lucioles ; F-06921 Sophia-Antipolis Cedex ; France , pages 1 - 646, XP052000251
- XIAOMI: "Detection of satellite backhaul based on configuration information", 3GPP DRAFT; S2-2100965, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. E (e-meeting); 20210224 - 20210309, 18 February 2021 (2021-02-18), Mobile Competence Centre ; 650, route des Lucioles ; F-06921 Sophia-Antipolis Cedex ; France, XP052173459
- TNO: "Procedures of utilizing backhaul related information during the PDU session establishment procedure", 3GPP DRAFT; S2-2005055, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20200819 - 20200902, 12 August 2020 (2020-08-12), Mobile Competence Centre ; 650, route des Lucioles ; F-06921 Sophia-Antipolis Cedex ; France , XP051919138
- ERICSSON: "IAB Node Integration Procedure", 3GPP DRAFT; R2-1903971, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi’an, P. R. of China; 20190408 - 20190412, 28 March 2019 (2019-03-28), Mobile Competence Centre ; 650, route des Lucioles ; F-06921 Sophia-Antipolis Cedex ; France , XP051693205

## Description

### Technical Field

The disclosure relates to a method and device for backhaul information-based session management in a wireless communication system.

### Background Art

In order to meet increasing demand with respect to wireless data traffic after the commercialization of 4^{th} generation (4G) communication systems, efforts have been made to develop 5^{th} generation (5G) or pre-5G communication systems. For this reason, the 5G or pre-5G communication system is also called a beyond 4G network communication system or post long term evolution (LTE) system.

In order to achieve a high data rate, 5G communication systems are being developed to be implemented in an ultra-high frequency band (millimeter wave (mmWave)), e.g., a band of 60 GHz. To reduce propagation loss of radio waves and increase a transmission range of radio waves in the ultra-high frequency bands, beamforming, massive multiple-input multiple-output (MIMO), full dimensional MIMO (FD-MIMO), array antenna, analog beamforming, and large-scale antenna techniques are under discussion in the 5G communication system.

To improve system networks, technologies for advanced small cells, cloud radio access networks (RANs), ultra-dense networks, device to device (D2D) communication, wireless backhaul, moving networks, cooperative communication, coordinated multi-points (CoMP), reception-end interference cancellation and the like are also being developed in the 5G communication system.

In addition, in the 5G system, an advanced coding modulation (ACM) method, e.g., hybrid FSK and QAM modulation (FQAM), sliding window superposition coding (SWSC), and advanced access technology, e.g., filter bank multi carrier (FBMC), non-orthogonal multiple access (NOMA), and sparse code multiple access (SCMA) are being developed.

The 5G system considers supporting various services, compared to an existing 4G system. Examples of representative services may include enhanced mobile broadband (eMBB), ultra-reliable and low latency communications (URLLC), massive machine type communications (mMTC), and evolved multimedia broadcast/multicast service (eMBMS). A system providing the URLLC service may be referred to as a URLLC system, and a system providing the eMBB service may be referred to as an eMBB system. Also, the terms "service" and "system" may be interchangeably used.

Among the above services, the URLLC service is a service that is newly considered in the 5G system, unlike the existing 4G system, and the service satisfies conditions such as ultra-high reliability (e.g., a packet error rate of about 10-5) and low latency (e.g., a latency time of about 0.5 msec), compared to other services. In order to satisfy these strict conditions, the URLLC service may need application of a transmission time interval (TTI) shorter than that of the eMBB service, and various operation methods utilizing the same are under consideration.

In the meantime, the Internet is evolving from a human-oriented connectivity network where humans generate and consume information to an Internet of things (IoT) network where distributed entities or things transmit, receive and process information without human intervention. Internet of Everything (IoE) technology, which is a combination of IoT technology and big data processing technology through connection with a cloud server or the like, is also emerging. In order to implement the loT, technology elements such as sensing technology, wired/wireless communication and network infrastructures, service interface technology, and security technology are required, and thus, technologies for inter-object connection, such as sensor network, machine to machine (M2M) communication, or machine-type communication (MTC), have recently been studied.

In an loT environment, intelligent Internet technology (IT) services that collect and analyze data generated by connected objects and create new value in human life may be provided. The loT may be applied to fields, such as smart homes, smart buildings, smart cities, smart cars or connected cars, smart grid, health care, smart home appliances, and advanced medical services through convergence and combination between existing information technologies (IT) and various industrial applications.

Accordingly, various attempts have been made to apply 5G communication systems to loT networks. For example, technologies such as sensor network, M2M communication, and MTC are implemented by 5G communication technologies such as beamforming, MIMO, and array antenna. The application of a cloud-RAN as big data processing technology may also be considered as an example of convergence of 5G technology and loT technology.

With the advancement of satellite communication technology, efforts are being made to integrate satellite communication technology, which has been introduced only limitedly, into a mobile communication network. In particular, research is underway to introduce a satellite link to a backhaul section (a section between a radio access network (RAN) and a core network) connected typically by an optical fiber-based wired link.

Reference: 3GPP DRAFT (2020-07-03); "Study on architecture aspects for using satellite access in 5G (Release 17)" discloses inter alia a registration procedure of a UE at a SAT-RAN.

Author: CATT; Reference: 3GPP DRAFT (2019-10-03); "A combined solution for key issue 5" discloses inter alia an AMF determining a satellite backhaul used by the UE based on a TNL association on which a PDU session establishment request is received.

### Disclosure

### Technical Problem

In the 3^{rd} generation partnership project (3GPP), standardization is being carried out for various scenarios of integrating mobile communication and 5^{th} generation (5G) technology in a 5G communication system. In particular, standardization is being carried out for a method of introducing satellite connection to a backhaul section that connects a radio access network (RAN) to a core network. Satellite connection has various advantages such as reducing the cost of establishing a wired link (such as installing embedded fiber optic cables). On the other hand, when satellite technology is applied to a backhaul section, a phenomenon such as a variable network situation or high latency may occur, and an additional mechanism may be required to satisfy the quality of service (QoS) in a 5G system.

When satellite technology is applied to a backhaul section, high latency may occur in transmitting a control signal and user data through a RAN and/or a core network installed on the ground, compared to case where a terrestrial backhaul network is used. Due to this high latency, a change may be needed in a session management method including network function (NF) selection for session management and QoS profile selection for policy and billing management.

Accordingly, there may be required a technology in which, when high latency may occur in a backhaul section due to the use of a non-terrestrial backhaul network including a satellite or the characteristics of other backhaul networks, backhaul network-related information may be set in advance during configuration of a RAN and a core network and a change procedure necessary for session management may be initiated when a backhaul network with high latency is actually used.

The technical problems to be solved in the disclosure are not limited to the above technical problems, and other technical problems not mentioned may be clearly understood by one of ordinary skill in the art based on the descriptions below.

### Technical Solution

The invention is defined by the appended claims. The description that follows is subjected to this limitation. In particular the invention relates to those parts of the disclosure concerning the method performed by the AMF and the AMF. Those parts of the disclosure relating e.g. to methods performed by the SMF are to be considered as useful for understanding the invention.

### Description of Drawings

FIG. 1 is a diagram illustrating a 5^{th} generation (5G) system architecture related to an embodiment of the disclosure.
FIG. 2 is a diagram illustrating a 5G system architecture when various types of backhaul networks are connectable to one radio access network (RAN) and one user plane function (UPF), according to an embodiment of the disclosure.
FIG. 3 is a diagram illustrating a 5G system architecture when various types of backhaul networks are connectable to one RAN and only one type of backhaul network is connectable to one UPF, according to an embodiment of the disclosure.
FIG. 4 is a diagram illustrating a 5G system architecture when only one type of backhaul network is connectable to one RAN and one UPF, according to an embodiment of the disclosure.
FIG. 5 is a diagram illustrating a method of transmitting backhaul network-related information using an N4 association setup procedure initiated by a session management function (SMF), according to an embodiment of the disclosure.
FIG. 6 is a diagram illustrating a method of transmitting backhaul network-related information using an N4 association setup procedure initiated by a UPF, according to an embodiment of the disclosure.
FIG. 7 is a diagram illustrating a method of transmitting backhaul network-related information using an N4 association update procedure initiated by an SMF, according to an embodiment of the disclosure.
FIG. 8 is a diagram illustrating a method of transmitting backhaul network-related information using an N4 association update procedure initiated by a UPF, according to an embodiment of the disclosure.
FIG. 9 is a diagram illustrating a method of transmitting backhaul network-related information using an N4 report procedure, according to an embodiment of the disclosure.
FIG. 10 is a diagram illustrating an internal structure of a terminal, according to an embodiment of the disclosure.
FIG. 11 is a diagram illustrating an internal structure of a base station, according to an embodiment of the disclosure.

### Mode for Invention

Hereinafter, operation principles of the disclosure will be described with reference to the accompanying drawings.

In the following description of embodiments of the disclosure, descriptions of techniques that are well known in the art and not directly related to the disclosure are omitted. This is to clearly convey the gist of the disclosure by omitting an unnecessary description.

For the same reason, some elements in the accompanying drawings are exaggerated, omitted, or schematically illustrated. Also, the size of each element may not substantially reflect its actual size. In the drawings, the same or corresponding elements are denoted by the same reference numerals.

The advantages and features of the disclosure, and methods of achieving the same, will become apparent with reference to embodiments of the disclosure described below in detail in conjunction with the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to one of ordinary skill in the art. In the specification, the same reference numerals denote the same elements.

It will be understood that each block of flowchart illustrations and combinations of blocks in the flowchart illustrations may include computer program instructions. Because these computer program instructions may be loaded into a processor of a general-purpose computer, special purpose computer, or other programmable data processing equipment, the instructions, which are executed via the processor of the computer or other programmable data processing equipment generate means for performing the functions specified in the flowchart block(s). Because these computer program instructions may also be stored in a computer-executable or computer-readable memory that may direct the computer or other programmable data processing equipment to function in a particular manner, the instructions stored in the computer- executable or computer-readable memory may produce an article of manufacture including instruction means for performing the functions stored in the flowchart block(s). Because the computer program instructions may also be loaded into a computer or other programmable data processing equipment, a series of operational steps may be performed on the computer or other programmable data processing equipment to produce a computer implemented process, and thus, the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Furthermore, the term "... unit" as herein used refers to a software or hardware component, such as a field programmable gate array (FPGA) or application specific integrated circuit (ASIC) which plays a certain role. However, the term "... unit" does not mean to be limited to software or hardware. A "... unit" may be configured to be in an addressable storage medium or may be configured to operate one or more processors. Accordingly, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "... units" may be combined into fewer elements and "... units" or may be further separated into additional components and "... units". Furthermore, components and "... units" may be implemented to operate one or more central processing units (CPUs) in a device or a secure multimedia card. Also, a "... unit" in an embodiment may include one or more processors.

Hereinafter, terms for identifying access nodes, terms indicating network entities, terms indicating messages, terms indicating interfaces between network entities, and terms indicating various identification information used herein are exemplified for convenience of explanation. Accordingly, the disclosure is not limited to terms described below, and other terms denoting objects having the same technical meanings may be used.

Hereinafter, for convenience of explanation, some terms and names defined in the 3^{rd} generation partnership project long term evolution (3GPP LTE) standard and the 3GPP 5^{th} generation (5G) standard may be used. However, the disclosure is not limited to the terms and names, and may also be applied to systems following other standards.

Hereinafter, exemplary embodiments of the disclosure will be described in detail with reference to the accompanying drawings. In this case, in the accompanying drawings, it will be understood that like reference numerals denote like elements. It should be noted that the accompanying drawings are provided to help understanding of the disclosure, and thus, the disclosure is not limited by any shape or arrangement in the drawings of the disclosure.

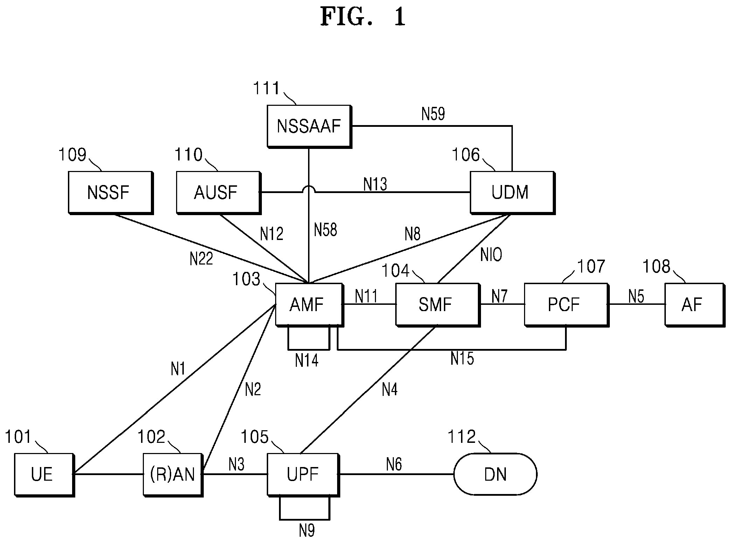

FIG. 1 is a diagram illustrating a 5G system architecture related to an embodiment of the disclosure.

Referring to FIG. 1, a 5G system architecture may include various components (i.e., network functions (NFs)). FIG. 1 illustrates some of the various components including an authentication server function (AUSF) 110, a (core) access and mobility management function (AMF) 103, a session management function (SMF) 104, a policy control function (PCF) 107, an application function (AF) 108, a unified data management (UDM) 106, a data network (DN) 112, a user plane function (UPF) 105, a (radio) access network ((R)AN) 102, and a terminal, i.e., a user equipment (UE) 101. Also, FIG. 1 illustrates a network slice selection function (NSSF) 109 and a network slice specific authentication and authorization function (NSSAAF) 111.

Each device illustrated in FIG. 1 may be implemented as a single server or device, or may be implemented as a network slice instance. When each device is implemented as a network slice instance, the same network slice instance or different network slice instances may be implemented in one server or device, or one network slice instance may be implemented in two or more servers or devices.

Respective NFs may support the following functions.

The AUSF 110 may process and store data for authentication of the UE.

The AMF 103 may provide a function for access and mobility management for each UE, and one UE may be basically connected to one AMF. Specifically, the AMF 103 may support functions such as inter-core network (CN) node signaling for mobility between 3GPP access networks, termination of a radio access network (RAN) CP interface (i.e., N2 interface), termination of NAS signaling (N1), NAS signaling security (NAS ciphering and integrity protection), AS security control, registration management (registration area management), connectivity management, idle mode UE reachability (including control and execution of paging retransmission), mobility management control (subscription and policy), support of intra-system mobility and inter-system mobility, support of network slicing, SMF selection, lawful intercept (for an AMF event and an interface to an LI system), provision of transmission of a session management (SM) message between the UE and the SMF, transparent proxy for SM message routing, access authentication, access authorization including roaming authority check, provision of transmission of an SMS message between the UE and a short message service function (SMSF), security anchor function (SAF), and/or security context management (SCM). Some or all of the functions of the AMF 103 may be supported within a single AMF instance of one AMF.

The DN 112 may refer to, for example, an operator service, Internet access, or 3^{rd} party service. The DN 112 may transmit a downlink protocol data unit (PDU) to the UPF 105 or may receive a PDU transmitted from the UE 101 from the UPF 105.

The PCF 107 may receive information about a packet flow from an application server and may provide a function of determining a policy such as mobility management and session management. Specifically, the PCF 107 may support functions such as support of a unified policy framework for controlling a network operation, provision of policy rules so that control plane function(s) (e.g., the AMF, the SMF, etc.) may enforce policy rules, and implementation of a front end for accessing related subscription information for policy decision within a user data repository (UDR).

The SMF 104 may provide a session management function, and when the UE has a plurality of sessions, the sessions may be respectively managed by different SMFs. Specifically, the SMF 104 may support functions such as session management (e.g., session establishment, modification, and release, including tunnel maintenance between UPF and AN nodes), UE IP address allocation and management (optionally including authentication), selection and control of a UP function, traffic steering configuration for routing traffic to an appropriate destination in the UPF, termination of an interface toward policy control functions, enforcement of a control part of a policy and quality of service (QoS), lawful intercept (regarding an SM event and an interface to an LI system), termination of an SM part of a NAS message, downlink data notification, an initiator of AN specific SM information (transmission to the AN through N2 via the AMF), SSC mode decision of a session, and a roaming function. As described above, some or all of the functions of the SMF 104 may be supported within a single instance of one SMF.

The UDM 106 may store subscription data of a user, policy data, etc. The UDM 106 may include two parts, i.e., an application front end (FE) (not shown) and a user data repository (UDR) (not shown).

The FE may include a UDM-FE that is in charge of location management, subscription management, processing of credential, etc. and PCF-FE that is in charge of policy control. The UDR may store data required for functions provided by the UDM-FE and a policy profile required by the PCF. The data stored in the UDR may include user subscription data including a subscription identifier, security credential, access and mobility-related subscription data, and session-related subscription data, and policy data. The UDM-FE may access subscription information stored in the UDR, and may support functions such as authentication credential processing, user identification handling, access authentication, registration/mobility management, subscription management, SMS management, and the like.

The UPF 105 may transmit a downlink PDU received from the DN 112 to the UE 101 via the (R)AN 102 and may transmit an uplink PDU received from the UE 101 to the DN 112 via the (R)AN 102. Specifically, the UPF 105 may support functions such as an anchor point for intra/inter RAT mobility, an external PDU session point of interconnection to a data network (DN), packet routing and forwarding, a user plane part of packet inspection and policy rule enforcement, lawful intercept, traffic usage reporting, an uplink classifier for supporting routing of a traffic flow to the DN, a branching point for supporting a multi-homed PDU session, QoS handling for a user plane (e.g., packet filtering, gating, uplink/downlink rate enforcement), uplink traffic verification (SDF mapping between a service data flow (SDF) and a QoS flow), transport level packet marking in an uplink and a downlink, downlink packet buffering and downlink data notification triggering, and the like. Some or all of the functions of the UPF 105 may be supported within a single instance of one UPF.

The AF 108 may interact with a 3GPP core network to provide services (e.g., support functions such as application influence on traffic routing, network capability exposure access, interaction with a policy framework for policy control, and the like).

The (R)AN 102 may collectively refer to a new radio access network supporting both evolved E-UTRA, which is an evolved version of 4G radio access technology, and New Radio (NR) access technology (e.g., gNB).

The gNB may support functions such as functions for radio resource management (i.e., radio bearer control, radio admission control, connection mobility control, dynamic allocation of resources to the UE in an uplink/downlink (i.e., scheduling)), Internet Protocol (IP) header compression, encryption of a user data stream and integrity protection, selection of an AMF upon attachment of the UE when routing to the AMF is not determined from information provided to the UE, routing of user plane data to UPF(s), routing of control plane information to the ANF, connection setup and release, scheduling and transmission of a paging message (generated from the AMF), scheduling and transmission of system broadcast information (generated from the AMF or operating and maintenance (O&M)), measurement for mobility and scheduling and measurement report configuration, transport level packet marking in an uplink, session management, support of network slicing, QoS flow management and mapping to a data radio bearer, support of a UE in an inactive mode, a NAS message distribution function, a NAS node selection function, radio access network sharing, dual connectivity, tight interworking between the NR and the E-UTRA, and the like.

The UE 101 may refer to a user equipment. The user equipment may be referred to as a terminal, a mobile equipment (ME), or a mobile station (MS). Also, the user equipment may be a portable device such as a laptop computer, a mobile phone, a personal digital assistant (PDA), a smartphone, or a multimedia device, or a non-portable device such as a personal computer (PC) and a vehicle-mounted device. The following will be described using the term UE or terminal.

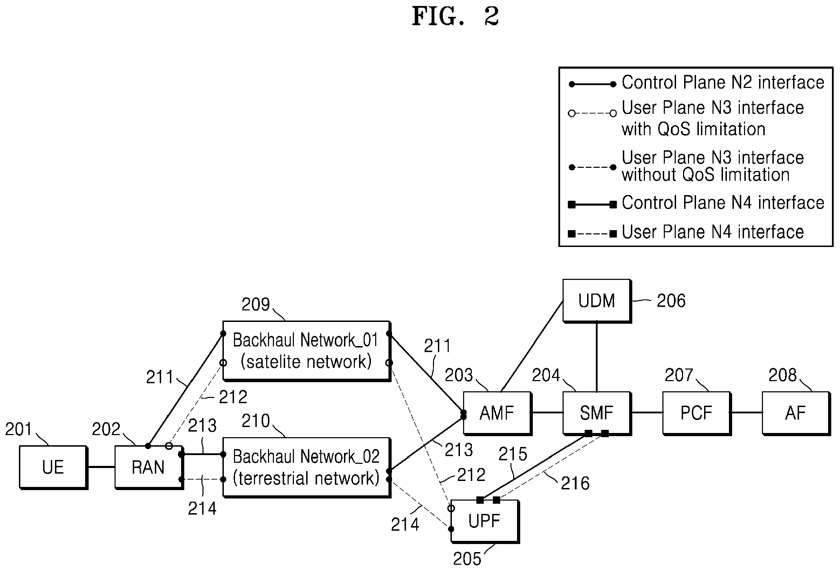

Although a network exposure function (NEF) and an NF repository function (NRF) are not shown in FIG. 1 for clarity of explanation, all the NFs shown in FIGS. 2 to 9 described below may perform interaction with the NEF and the NRF when necessary.

The NRF will be described. The NRF (not shown in FIG. 1) may support a service discovery function. When the NRF receives an NF discovery request from a first NF instance, the NRF may provide, to the first NF instance, information of a second NF instance discovered after a second NF discovery operation. Also, the NRF may maintain available NF instances and services supported by the NF instances.

FIG. 1 illustrates a reference model where the UE accesses one DN using one PDU session, for convenience of explanation. However, the disclosure is not limited thereto.

The UE 101 may simultaneously access two (i.e., local and central) data networks by using multiple PDU sessions. In this case, two SMFs may be selected for different PDU sessions. Each SMF may have a capability to control both a local UPF and a central UPF within the PDU session.

Further, the UE 101 may simultaneously access two (i.e., local and central) data networks provided within a single PDU session.

In a 3GPP system, a conceptual link connecting between NFs in a 5G system is defined as a reference point. Reference points included in the 5G system architecture of FIG. 1 are as follows.
- N1: Reference point between the UE and the AMF
- N2: Reference point between the (R)AN and the AMF
- N3: Reference point between the (R)AN and the UPF
- N4: Reference point between the SMF and the UPF
- N5: Reference point between the PCF and the AF
- N6: Reference point between the UPF and the data network
- N7: Reference point between the SMF and the PCF
- N8: Reference point between the UDM and the AMF
- N9: Reference points between two core UPFs
- N10: Reference point between the UDM and the SMF
- N11: Reference point between the AMF and the SMF
- N12: Reference point between the AMF and the AUSF
- N13: Reference point between the UDM and the authentication server function (AUSF)
- N14: Reference point between two AMFs
- N15: Reference point between the PCF and the AMF in the case of a non-roaming scenario, reference point between the PCF and the AMF in a visited network in the case of a roaming scenario

In the following description, a terminal may refer to the UE 101, and the terms UE and terminal may be interchangeably used. In this case, unless a terminal is specifically defined additionally, the terminal should be understood as the UE 101.

The terminal accesses a data network (e.g., a network providing Internet services) through a 5G system and establishes a session. Each data network may be distinguished by using an identifier called a data network name (DNN). The DNN may be used to determine an NF related to a user plane, an interface between NFs, an operator policy, etc. when the terminal connects a network system to a session. The DNN may be used, for example, to select an SMF and UPF(s) for a PDU session, and may be used to select an interface (e.g., N6 interface) between a data network and a UPF for the PDU session. Also, the DNN may be used to determine a mobile communication service provider's policy for application to the PDU session.

FIGS. 2 to 4 are diagrams illustrating a structure of a 5G system including a backhaul network, according to various embodiments of the disclosure. Embodiments may be divided into FIGS. 2 to 4 according to whether only one type of backhaul network may be connected or multiple types of backhaul networks may be connected to a RAN and a UPF. When a RAN and a core network receive a 5G network connection request from a UE, according to a network setup method of a 5G network operator, a method of determining a type of a backhaul network suitable for the UE and a method of determining a type of a backhaul network used by the UE may vary.

FIG. 2 is a diagram illustrating a 5G system architecture when multiple types of backhaul networks are connectable to one RAN and one UPF, according to an embodiment of the disclosure.

FIG. 2 illustrates a satellite backhaul network 209 that is a backhaul network using a satellite and a terrestrial backhaul network 210 that is a backhaul network using terrestrial resources as backhaul networks that may be used between a RAN 202 and an AMF 203 and between the RAN 202 and a UPF 205.

Also, FIG. 2 illustrates control plane connection 211 through satellite backhaul, user plane connection 212 through satellite backhaul, control plane connection 213 through terrestrial backhaul, user plane connection 214 through terrestrial backhaul, control plane connection 215 between an SMF 204 and the UPF 205, and user plane connection 216 between the SMF 204 and the UPF 205.

### Referring to FIG. 2,

1. when the RAN 202 receives a registration request from a UE 201, the RAN 202 may select a backhaul network for control plane connection using an N2 interface between the AMF 203 and the RAN 202. When the RAN 202 selects a backhaul network, the RAN 202 may refer to at least one of Information (a) to (g).
   (a) Capacity of available backhaul networks
   (b) Network congestion of available backhaul networks
   *75(c) Types of available backhaul networks (e.g., terrestrial, satellite, and other non-terrestrial networks. However, the disclosure is not limited thereto.)
   (d) Type of a backhaul network previously selected for the UE or the AMF
   (e) Location of the UE
   (f) Location of the RAN
   (g) Location of the AMF
2. The RAN 202 may transmit a registration request message received from the UE 201 to the AMF 203 through the selected backhaul network.
3. When the AMF 203 receives the registration request message of the UE 201 from the RAN 202, the AMF 203 may determine a type of the used backhaul network by using a transport network layer (TNL) association identifier through which the message is transmitted. In an embodiment, mapping information between the TNL association identifier and the type of the backhaul network may be determined by an operator policy. In an embodiment, the AMF 203 may determine the type of the used backhaul network by referring to at least one of Information A to D.
   A. TNL association identifier through which the registration request message of the UE 201 is transmitted from the RAN 202
   B. Mapping information between the TNL association identifier and the type of the backhaul network
   C. Identifier of the RAN 202 (e.g., gNB ID)
   D. Mapping information between the identifier of the RAN 202 and the type of the backhaul network
   The mapping information between the identifier of the RAN 203 and the type of the backhaul network of Information D may be determined by the operator policy.
4. The AMF 203 may use the same backhaul network selected by the RAN 202. Alternatively, when there is another backhaul network that is more suitable when determined by using at least one of Information (h) to (j), the AMF 203 may change the backhaul network to the other backhaul network. For example, when the RAN 201 selects the control plane connection 211 using satellite backhaul but it is determined that the control plane connection 213 using terrestrial backhaul is more suitable at a time when the AMF 203 receives the registration request message, or backhaul network preference information for the UE 201 is received from a UDM 206, or the backhaul network needs to be changed by the operator policy, the AMF 203 may change the backhaul network to the control plane connection 213 using terrestrial backhaul.
   (h) Identifier of the RAN 202 (e.g., gNB ID)
   (i) Whether there is another available backhaul network between the RAN 202 and the AMF 203
   (j) Combination of all or some of Information (a) to (g)
5. The AMF 203 may transmit a control signal to the RAN 202 through a finally determined backhaul network.
6. When the RAN 202 receives the control signal from the AMF 203, the RAN 202 may recognize the finally selected backhaul network by using a TNL association identifier through which the control signal is transmitted.
7. When the AMF 203 receives a PDU session establishment request from the UE 201 after a registration procedure is completed, the AMF 203 may select an SMF 204 by considering the type of the backhaul network selected for control plane through the N2 interface.
8. The AMF 203 may transmit the type of the backhaul network selected for control plane through the N2 interface to the SMF 204.
9. The SMF 204 may select the UPF 205 by considering the type of the backhaul network selected for control plane through the N2 interface and whether the UPF 205 supports one or more types of backhaul networks. FIG. 2 illustrates a case where the UPF 205 supporting one or more ty pes of backhaul networks is selected.
10. The UPF 205 may set a different range of UE IP addresses for user plane connection using an N3 interface according to a type of a backhaul network. For example, when the UPF 205 has addresses 1 to 10 as IP addresses that may be assigned to UE IP addresses, the UPF 205 may determine that addresses 1 to 3 may be assigned for user plane using satellite backhaul and addresses 4 to 10 may be assigned for user plane using terrestrial backhaul. However, the disclosure is not limited thereto, and this determination may be made by the operator policy. IP address pool information and a network instance may be used as a format for indicating the range of UE IP addresses. A network instance refers to a domain identifier that distinguishes a network domain or a service domain according to a configuration of a network, a service provided to a user, and subscriber information, and allows the flow of data traffic corresponding to each domain to be adjusted. A method of defining a domain may be determined by an operator policy or a network equipment configuration policy. In adjusting the flow of data traffic, a method of detecting and routing traffic by defining an IP address pool that may be assigned to each domain may be included. A network instance may be independently managed in a UPF, a PCF, and an SMF. For example, the UPF may manage to use different network instances for different backhaul networks. However, the disclosure is not limited thereto.
11. The range of UE IP addresses selected by the UPF 205 for PDU session establishment and/or information related to the user plane connection using the N3 interface may be transmitted to the RAN 202 through the backhaul network selected for control plane through the SMF 204 and the AMF 203.
12. The RAN 202 may set a different range of N3 AN tunnel information for user plane connection using the N3 interface according to a type of a backhaul network. For example, when the RAN has addresses 1 to 10 as IP addresses that may be assigned as N3 AN tunnel information, the RAN may determine that addresses 1 to 3 may be assigned for user plane using satellite backhaul and addressees 4 to 10 may be assigned for user plane using terrestrial backhaul. However, the disclosure is not limited thereto, and this determination may be made by the operator policy. IP address pool information and a network instance may be used as a format for indicating the range of N3 AN tunnel information.
13. When the RAN 202 determines a type of a backhaul network to be used for user plane, the RAN 202 may refer to at least one of Information (k) and (l).
   (k) Type of the backhaul network selected for control plane connection through the N2 interface in the registration procedure
   (l) Type of the backhaul network assigned to the UE IP address pool information range received from the UPF 205
14. The range of N3 AN tunnel information may be transmitted to the SMF 204 and the UPF 205 through the control plane backhaul network.

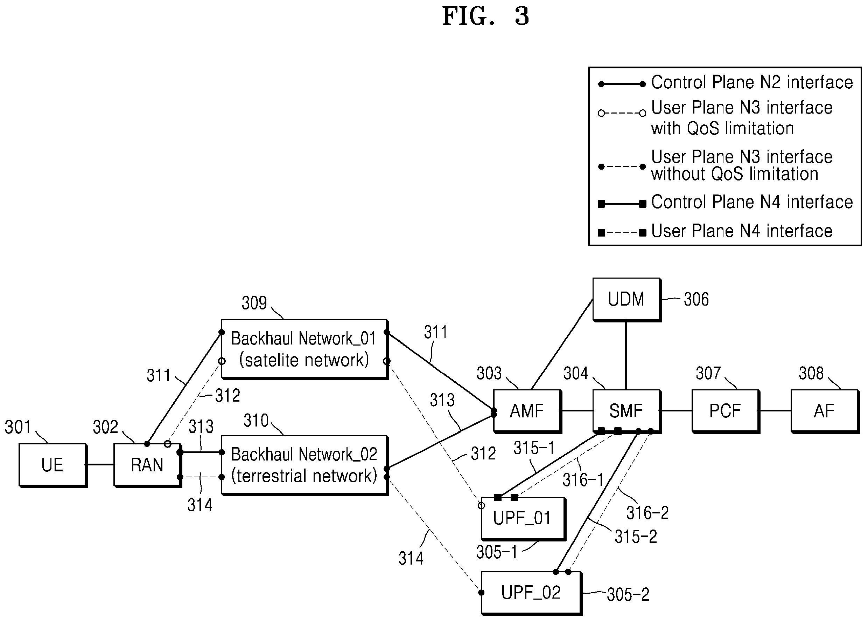

FIG. 3 is a diagram illustrating a 5G system architecture in which multiple types of backhaul network are connectable to one RAN and only one type of backhaul network may be connected to one UPF, according to an embodiment of the disclosure.

FIG. 3 illustrates a backhaul network 309 using a satellite, a terrestrial backhaul network 310, a UPF 305-1 that may communicate with a RAN 302 through a satellite backhaul network, and a UPF 305-2 that may communicate with the RAN 302 through a terrestrial backhaul network.

Also, FIG. 3 illustrates control plane connection 311 through satellite backhaul, user plane connection 312 through satellite backhaul, control plane connection 313 through terrestrial backhaul, user plane connection 314 through terrestrial backhaul, control plane connection 315-1 and user plane connection 316-1 between the UPF 305-1 and an SMF 304 supporting communication through satellite backhaul, and control plane connection 315-2 and user plane connection 316-2 between the UPF 305-2 and the SMF 304 supporting communication through terrestrial backhaul.

A method of determining a type of a backhaul network in the 5G system architecture of FIG. 3 will be described based on Steps 1 to 14 described with reference to FIG. 2.

FIG. 3 illustrates a case where when the SMF 304 selects a UPF in Step 9 of FIG. 2, the SMF 304 considers a type of a backhaul network selected for control plane through an N2 interface and selects a UPF supporting the type of the backhaul network. For example, when a backhaul network used for control plane through the N2 interface finally determined in Step 4 of FIG. 2 is the satellite backhaul network 309, the SMF 304 may select the UPF 305-1 supporting a satellite backhaul network.

Referring to FIG. 3, when the SMF 304 receives a range of UE IP addresses selected for PDU session establishment and/or information related to user plane connection using an N3 interface from the UPF in Step 11 of FIG. 2, the SMF 304 may transmit the information received from the UPF and a range of N3 CN tunnel information to the RAN 302 through the backhaul network selected for control plane through an AMF 303. The SMF 304 may set a different range of N3 CN tunnel information according to a type of a backhaul network supported by the UPF or UPF ID. For example, when the SMF 304 selects a UPF in the description using Step 9 of FIG. 2, the SMF 304 may determine a range of IP addresses that may be assigned to N3 CN tunnel information according to the number of types of backhaul networks supported by the UPF. This determination may be made by an operator policy. IP address pool information and a network instance may be used as a format for indicating the range of N3 CN tunnel information.

Referring to FIG. 3, when the RAN 302 determines a type of a backhaul network used for user plane in Step 13 of FIG. 2, the RAN 302 may refer to at least one of Information (m) to (o).
(m) Type of the backhaul network selected for control plane connection through an N2 interface in a registration procedure
(n) Type of a backhaul network assigned to a UE IP address pool information range received from the UPF
(o) Type of a backhaul network assigned to the N3 CN tunnel information range received from the SMF 304

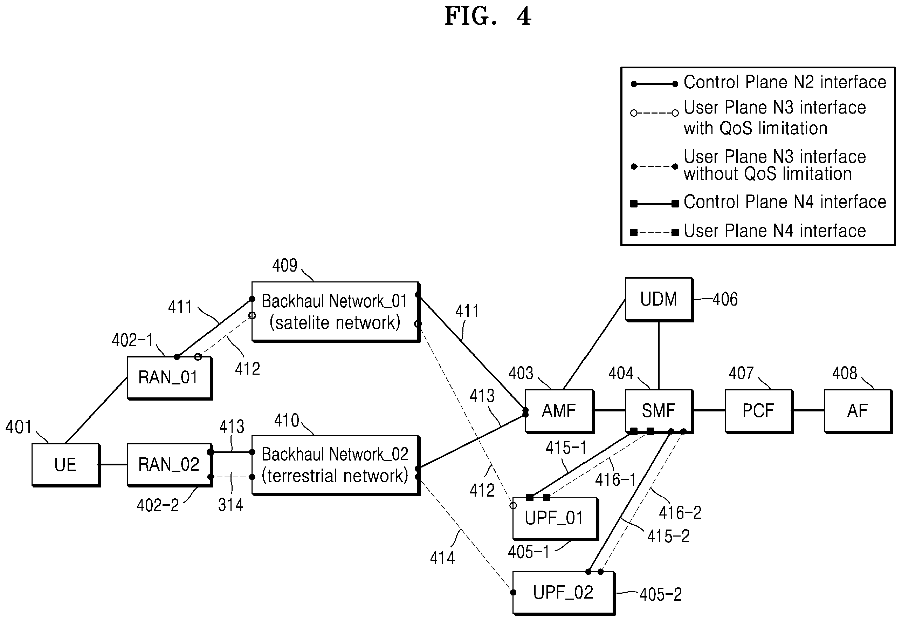

FIG. 4 is a diagram illustrating a 5G system architecture when only one type of backhaul network is connectable to one RAN and one UPF, according to an embodiment of the disclosure.

FIG. 4 illustrates a backhaul network 409 using a satellite, a terrestrial backhaul network 410, a RAN 402-1 supporting communication through satellite backhaul, a RAN 402-2 supporting communication through terrestrial backhaul, a UPF 405-1 supporting communication through satellite backhaul, a UPF 405-2 supporting communication through terrestrial backhaul, control plane connection 411 and user plane connection 412 through satellite backhaul, control plane connection 413 and user plane connection 414 through terrestrial backhaul, control plane connection 415-1 and user plane connection 416-1 between the UPF 405-1 and an SMF 404 supporting communication through satellite backhaul, and control plane connection 415-2 and user plane connection 416-2 between the UPF 405-2 and the SMF 404 supporting communication through terrestrial backhaul.

A method of determining a type of a backhaul network in the 5G system architecture of FIG. 4 will be described based on the description made with reference to FIGS. 2 and 3.

Referring to FIG. 4, when a RAN 402 receives a registration request from a UE 401 in Step 1 of FIG. 2, the RAN 402 may refer to at least one of Information (a) to (g) to select a backhaul network for control plane connection using an N2 interface between an AMF 403 and the RAN 402. When the RAN 402 selects a backhaul network whose type is different from that of a backhaul network supported by the RAN 402, the RAN 402 may hand over the request of the UE 401 to a RAN supporting the backhaul network. For example, when the UE 401 transmits a registration request message to the RAN 402-1 supporting a satellite backhaul network but it is determined that the control plane connection 411 through the satellite backhaul network 409 is congested at a time when the RAN 402-1 receives the request of the UE, a handover procedure may be initiated to another RAN 402-2 to use the terrestrial backhaul network 410. Also, the RAN 402 may hand over the request of the UE to another RAN supporting the same type of backhaul network as the backhaul network supported by the RAN 402. A process in which the RAN 402 selects a backhaul network may be omitted. In this case, the RAN 402 may use the same backhaul network supported by the RAN 402.

Referring to FIG. 4, in Step 2 of FIG. 2, the RAN 402 may transmit the registration request message received from the UE 401 to an AMF 403 through the selected backhaul network. When the RAN 402 may not determine a type of the backhaul network supported by the RAN 402, the RAN 402 may determine a type of the backhaul network supported by the RAN 402 by using a TNL association identifier. Mapping information between the TNL association identifier and the type of the backhaul network may be determined by an operator policy.

Referring to FIG. 4, when the AMF 403 determines to change to another backhaul network in Step 4 of FIG. 2, the AMF 403 may transmit a control signal through a finally determined backhaul network to the RAN 402 supporting the backhaul network.

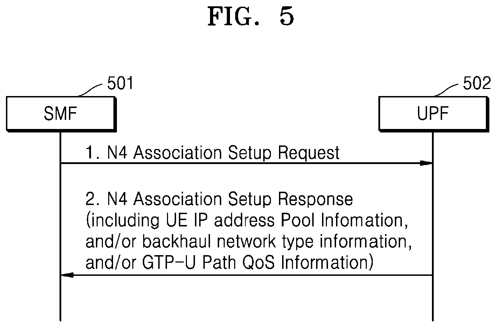

FIG. 5 is a diagram illustrating a method of transmitting backhaul network-related information using an N4 association setup procedure initiated by an SMF, according to an embodiment of the disclosure.

An N4 association setup procedure refers to a process of exchanging functions and node characteristics supported by an SMF and a UPF, before establishing an N4 session using resources between control plane and user plane between the SMF and the UPF.

Referring to FIG. 5, in Step 1, an SMF 501 may request a UPF 502 for N4 association setup. The SMF 501 may perform at least some of Operations A to F below.
A. The SMF 501 may transmit a type of a backhaul network used for control plane through an N2 interface to the UPF 502.
B. The SMF 501 may request the UPF 502 for a type of a backhaul network supported by the UPF 502 and other backhaul network-related information.
C. The SMF 501 may request the UPF 502 for whether the existence of a backhaul network between the UPF and a RAN is detected, whether the existence of a non-terrestrial backhaul network is detected, a type of a detected backhaul network, and other detected backhaul network-related information.
D. The SMF 501 may request the UPF 502 for information about a network instance that may be supported by the UPF 502 and other network instance-related information.
E. The SMF 501 may request the UPF 502 for information about a range of IP addresses that may be assigned by the UPF 502 to a UE. The information about the range of IP addresses may include a range of IP addresses that may be assigned for each type of backhaul network, a range of IP addresses that may be assigned for each network instance, and/or a range of IP addresses that may be assigned for each S-NSSAI.
F. The SMF 501 may request the UPF 502 for QoS information about user plane paths managed by the UPF 502. The user plane paths may include a general packet radio system (GPRS) tunneling protocol user plane (GTP-U) path. The SMF 501 may provide Indication Information i to iii below as information indicating a target of the requested QoS information.
   i. Interface type of the GTP-U path. (e.g., N3, N9)
   ii. Condition for initiating QoS information reporting. The initiating condition may include a threshold value and a measurement cycle.
   iii. When the condition for initiating QoS information reporting is a threshold value, a target to which the threshold value is to be applied may be included. The target may include an average packet delay time, a minimum packet delay time, and a maximum packet delay time.

In Step 2 of FIG. 5, the UPF 502 may transmit the information requested in Step 1 to the SMF 501. In an embodiment, the UPF 502 may provide all of the requested information or may provide only available information. In an embodiment, even when the UPF 502 is not a target of receiving the request from the SMF 501 in Step 1, the UPF 502 may transmit: to the SMF 501, the type of the backhaul network supported by the UPF 502 and other backhaul network-related information; when the UPF 502 detects the existence of the backhaul network between the UPF and the RAN, the fact of the detection, the type of the detected backhaul network, and other backhaul network characteristic-related information; the information about the network instance that may be supported by the UPF 502 and other network instance-related information; the information about the range of IP addresses that may be assigned by the UPF 502 to the UE; and/or the QoS information about user plane paths managed by the UPF 502.

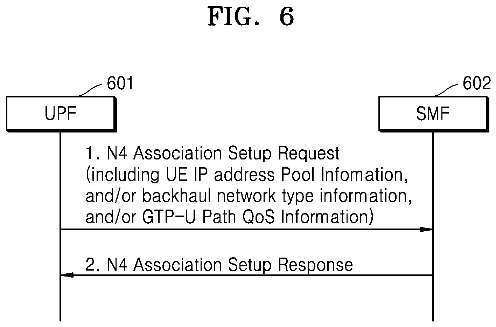

FIG. 6 is a diagram illustrating a method of transmitting backhaul network-related information using an N4 association setup procedure initiated by a UPF, according to an embodiment of the disclosure.

Referring to FIG. 6, in Step 1, a UPF 601 may request an SMF 602 for N4 association setup. In an embodiment, the UPF 601 may request the SMF 602 for a type of a backhaul network used for control plane through an N2 interface and other information. In an embodiment, when the UPF 601 transmits the request of N4 association setup, the UPF 601 may provide at least one of Information G to L.
G. Whether the UPF 601 detects the existence of a backhaul network between the UPF and a RAN, whether the UPF 601 detects the existence of a non-terrestrial backhaul network, a type of a detected backhaul network, and other detected backhaul network-related information
H. Type of a backhaul network used for control plane through an N3 interface
I. Type of a backhaul network supported by the UPF 601 and other backhaul network-related information
J. Information of a network instance that may be supported by the UPF 601 and other network instance-related information
K. Information about a range of IP addresses that may be assigned by the UPF 601 to a UE. The information about the range of IP addresses may include a range of IP addresses that may be assigned for each type of backhaul network, a range of IP addresses that may be assigned for each network instance, and/or a range of IP addresses that may be assigned for each S-NSSAI.
L. QoS information about user plane paths managed by the UPF 601. The user plane paths may include a GTP-U path.

Referring to FIG. 6, in Step 2, the SMF 602 may respond to the N4 association setup request of the UPF 601. In an embodiment, even when the SMF 602 is not a target of receiving the request from the UPF 601 in Step 1, the SMF 602 may provide the type of the backhaul network used for control plane through the N2 interface and other information.

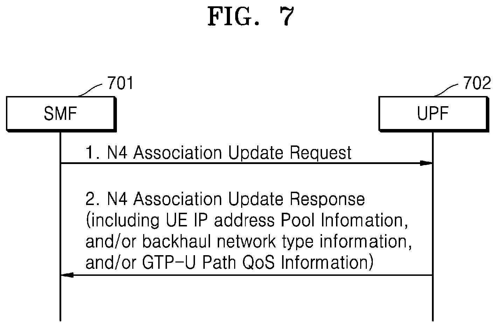

FIG. 7 is a diagram illustrating a method of transmitting backhaul network-related information using an N4 association update procedure initiated by an SMF, according to an embodiment of the disclosure.

An N4 association update procedure refers to a process of exchanging changed information, when there is a change in functions, node characteristics, and available resources supported by an SMF and a UPF, for N4 association established between the SMF and the UPF.

Referring to FIG. 7, in Step 1, an SMF 701 may request a UPF 702 for N4 association update. The SMF 701 may perform at least one of Operations A to F described with reference to FIG. 5. In an embodiment, when the SMF 701 performs at least one of Operations A to F, the SMF 701 may provide or request all information, or may provide or request only changed information.

In Step 2 of FIG. 7, the UPF 702 may transmit the information requested in Step 1 to the SMF 701. In an embodiment, even when the UPF 702 is not a target of receiving the request from the SMF 701 in Step 1, the UPF 702 may transmit: to the SMF 701, a type of a backhaul network supported by the UPF 702 and other backhaul network-related information; information about a range of IP addresses that may be assigned by the UPF to a UE; when the UPF 702 detects the existence of a backhaul network between the UPF and a RAN, the fact of the detection, a type of a detected backhaul network, and other backhaul network characteristic-related information; information about a network instance that may be supported by the UPF 702 and other network instance-related information; and/or QoS information about user plane paths managed by the UPF 702. In an embodiment, the UPF 702 may provide all of the information or may provide only changed information.

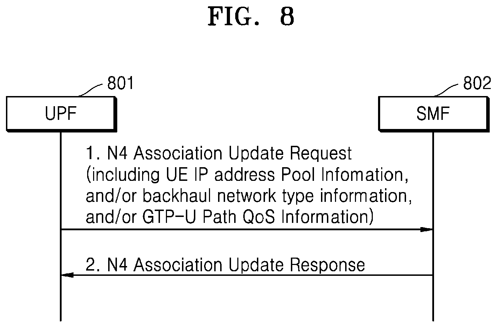

FIG. 8 is a diagram illustrating a method of transmitting backhaul network-related information using an N4 association update procedure initiated by a UPF, according to an embodiment of the disclosure.

Referring to FIG. 8, in Step 1, a UPF 801 may request an SMF 802 for N4 association update. In an embodiment, the UPF 801 may request the SMF 802 for a type of a backhaul network used for control plane through an N2 interface and other information. In an embodiment, the UPF 801 may provide or request all information to the SMF 802, or may provide or request only changed information. In an embodiment, when the UPF 801 transmits the request, the UPF 801 may provide at least one of Information G to L described with reference to FIG. 6.

Referring to FIG. 8, in Step 2, the SMF 802 may respond to the N4 association update request of the UPF 801. In an embodiment, even when the SMFG 802 is not a target of receiving the request from the UPF 801 in Step 1, the SMF 802 may provide the type of the backhaul network used for control plane through the N2 interface and other information. In an embodiment, the SMF 802 may provide all of the information or may provide only changed information.

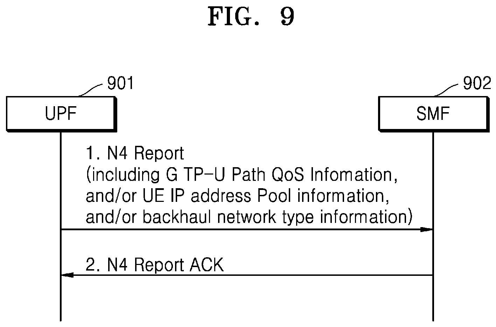

FIG. 9 is a diagram illustrating a method of transmitting backhaul network-related information using an N4 report procedure, according to an embodiment of the disclosure.

An N4 report procedure refers to a process in which a UPF provides, to an SMF, information not limited to a specific N4 session established between the SMF and the UPF. Examples of the information not limited to the specific N4 session may be as follows. When a problem occurs in a user plane connection path (e.g., a connection path using a GTP-U protocol (GTP-U path)) managed by the UPF and the user plane connection path may not be used, it may affect management of all N4 sessions established between the UPF and all counterpart nodes (e.g., a RAN or other UPFs) connected through the path. Accordingly, in this case, the UPF may report, to the SMF, information for identifying the user plane connection path having the problem, information related to the problem, information for identifying the affected N4 sessions, and information for identifying the counterpart nodes.

Referring to FIG. 9, in Step 1, when a UPF 901 recognizes that an event has occurred in information that is not limited to a specific N4 session, the UPF 901 may transmit, to an SMF 902, an N4 report message including a UPF ID, the event, and a state. The event may include at least one of a change in a backhaul network used for user plane managed by the UPF, a change in a type of a backhaul network, a change in other backhaul network-related information, whether a backhaul network is available, an abnormal change in an average packet delay time, a minimum packet delay time, or a maximum packet delay time of a backhaul network section, a change in a range of IP addresses that may be assigned by the UPF, information of a network instance that may be supported by the UPF and other network instance-related information, a change in the information of the network instance that may be supported by the UPF, and a change in the other network instance-related information. However, the disclosure is not limited thereto.

Referring to FIG. 9, in Step 2, the SMF 902 may notify the UPF 901 that the N4 report message of Step 1 has been received.

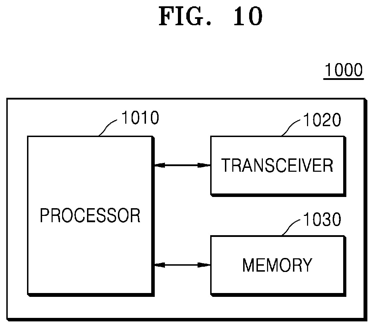

FIG. 10 is a diagram illustrating an internal structure of a terminal, according to an embodiment of the disclosure.

Referring to FIG. 10, a terminal 1000 may include a processor 1010, a transceiver 1020, and a memory 1030. According to the above communication method of the terminal, the processor 1010, the transceiver 1020, and the memory 1030 of the terminal may operate. However, elements of the terminal are not limited thereto. For example, the terminal may include more elements or fewer elements than the afore-described elements. Furthermore, the processor 1010, the transceiver 1020, and the memory 1030 may be implemented as one chip.

The processor 1010 may control a series of processes to allow the terminal to operate according to the above embodiment. The processor 1010 may perform only some operations in the above embodiment. However, the disclosure is not limited thereto, and the processor 1010 may control all processes so that the terminal operates according to all or part of the above embodiment.

The transceiver 1020 may transmit and receive a signal to and from a base station. The signal may include control information and data. To this end, the transceiver 1020 may include an RF transmitter for up-converting and amplifying a frequency of a transmitted signal, and an RF receiver for low-noise amplifying and down-converting a frequency of a received signal. However, this is merely an example of the transceiver 1020, and elements of the transceiver 1020 are not limited to the RF transmitter and RF receiver.

Also, the transceiver 1020 may receive a signal through a wireless channel and may output a signal to the processor 1010, and may transmit a signal output from the processor 1010 through the wireless channel.

The memory 1030 may store programs and data necessary for operations of the terminal. Also, the memory 1030 may store control information or data included in a signal obtained by the terminal. The memory 1030 may include a storage medium such as a read-only memory (ROM), a random-access memory (RAM), a hard disk, a compact disk (CD)-ROM, or a digital versatile disk (DVD), or a combination thereof. Also, the memory 1030 may include a plurality of memories.

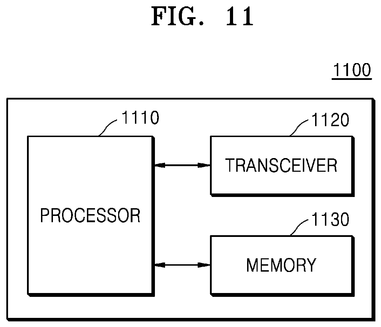

FIG. 11 is a diagram illustrating an internal structure of a base station, according to an embodiment of the disclosure.

Referring to FIG. 11, a base station may include a processor 1110, a transceiver 1120, and a memory 1130. According to the communication method of the base station, the processor 1110, the transceiver 1120, and the memory 1130 may operate. However, elements of the base station are not limited thereto. For example, the base station may include more or fewer elements than those illustrated in FIG. 11. In addition, the processor 1110, the transceiver 1120, and the memory 1130 may be implemented as one chip. In an embodiment, the base station may include entities included in the base station and a core network, for example, an AMF, an SMF, and a UPF.

The processor 1110 may control a series of processes to allow the base station to operate according to the above embodiment. The processor 1110 may perform only some operations in the above embodiment. However, the disclosure is not limited thereto, and the processor 1110 may control all processes so that the base station operates according to all or part of the above embodiment.

The transceiver 1120 may transmit and receive a signal to and from a terminal. The signal may include control information and data. To this end, the transceiver 1120 may include an RF transmitter for up-converting and amplifying a frequency of a transmitted signal, and an RF receiver for low-noise amplifying and down-converting a frequency of a received signal. However, this is merely an example of the transceiver 1120, and elements of the transceiver 1120 are not limited to the RF transmitter and RF receiver.

Also, the transceiver 1120 may receive a signal through a wireless channel and may output a signal to the processor 1110, and may transmit a signal output from the processor 1110 through the wireless channel.

The memory 1130 may store programs and data necessary for operations of the base station. Also, the memory 1130 may store control information or data included in a signal obtained by the base station. The memory 1130 may include a storage medium such as a ROM, a RAM, a hard disk, a CD-ROM, or a DVD, or a combination thereof. Also, the memory 1130 may include a plurality of memories. In an embodiment, the memory 1130 may store a program for backhaul information-based session management.

According to various embodiments of the disclosure, there is provided a method of presetting backhaul network-related information when configuring a network in a 3GPP 5G system, and determining a backhaul network to be used by a RAN and a core network when there is a request of 5G network connection from a user equipment (UE).

Also, according to various embodiments of the disclosure, there is provided a method of determining characteristics of a backhaul network used when a UE is connected to a RAN and a core network in a 3GPP 5G system, and there is provided a method of selecting an SMF or a UPF suitable for session management based on the determination.

Also, according to various embodiments of the disclosure, there is provided a method of exchanging characteristic information of a backhaul network, used when a UE is connected to a RAN and a core network in a 3GPP 5G system, between NFs performing a session management procedure, and there is provided a method of performing a procedure necessary for session management, including selection of a Qos profile for policy and billing management and selection of a user data transmission path, based on the characteristic information of the backhaul network used by the UE.

The effects obtainable in the disclosure are not limited to the above effects, and other effects not mentioned may be clearly understood by one of ordinary skill in the art from the above description.

Methods according to the claims or the embodiments described herein may be implemented by hardware, software, or a combination of hardware and software.

When the methods are implemented by software, a computer-readable storage medium storing one or more programs (software modules) may be provided. The one or more programs stored in the computer-readable storage medium are configured to be executed by one or more processors in an electronic device. The one or more programs include instructions for allowing an electronic device to execute the methods according to the claims or the embodiments.

The programs (e.g., software modules or software) may be stored in a random-access memory (RAM), a non-volatile memory including a flash memory, a read-only memory (ROM), an electrically erasable programmable read-only memory (EEPROM), a magnetic disc storage device, a compact disc-ROM (CD-ROM), a digital versatile disc (DVD), another optical storage device, or a magnetic cassette. Alternatively, the programs may be stored in a memory including any combination of some or all of the above storage media. Also, each of the memories may include a plurality of memories.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may be connected, via an external port, to an apparatus for performing an embodiment of the disclosure. Also, a separate storage device on a communication network may be connected to an apparatus for performing an embodiment of the disclosure.

In specific embodiments of the disclosure described above, components included in the disclosure are expressed in the singular or plural according to the specific embodiments of the disclosure set forth. However, the singular or plural representations are selected suitably according to situations for convenience of explanation, the disclosure is not limited to the singular or plural components, and components expressed in the plural may even be configured in the singular or components expressed in the singular may even be configured in the plural.

It should be understood that the embodiments of the disclosure described herein should be considered in a descriptive sense only and not for purposes of limitation. That is, it will be understood by one of ordinary skill in the art that various changes in form and details may be made within the scope of the appended claims.

## Claims

1. A method performed by an access and management function, AMF, network entity (203) in a wireless communication system capable of using a plurality of backhaul networks, the operating method comprising:
receiving a registration request message of a user terminal, from a radio access network, RAN;
identifying a backhaul network used by the RAN for control plane connection from among the plurality of backhaul networks, based on a transport network layer, TNL, association identifier through which the registration request message is transmitted; and
determining a backhaul network to be used for control plane connection, based on the identified backhaul network.

2. The method of claim 1, wherein the identifying of the backhaul network used by the RAN for control plane connection comprises identifying the backhaul network used by the RAN for control plane connection, based on pre-determined mapping information between the TNL association identifier and the backhaul network.

3. The method of claim 1, wherein the determining of the backhaul network to be used for control plane connection comprises determining to use the backhaul network used by the RAN for control plane connection.

4. The method of claim 1, wherein the plurality of backhaul networks comprise at least one terrestrial network and at least one satellite network.

5. The method of claim 1, further comprising transmitting, to a session management function, SMF, network entity (204), information about the determined backhaul network to be used for control plane connection.

6. An access and management function, AMF, network entity, comprising:
a transceiver; and
a processor coupled to the transceiver, and configured to:
receive, via the transceiver, a registration request message of a user terminal, from a radio access network, RAN,
identify a backhaul network used by the RAN for control plane connection from among the plurality of backhaul networks, based on a transport network layer, TNL, association identifier through which the registration request message is transmitted, and
determine a backhaul network to be used for control plane connection, based on the identified backhaul network.

7. The AMF of claim 6, wherein the processor is configured to identify the backhaul network used by the RAN for control plane connection, based on pre-determined mapping information between the TNL association identifier and the backhaul network.

8. The AMF of claim 6, wherein the processor is configured to determine to use the backhaul network used by the RAN for control plane connection.

9. The AMF of claim 6, wherein the plurality of backhaul networks comprise at least one terrestrial network and at least one satellite network.

10. The AMF of claim 6, wherein the processor is configured to transmit, to a session management function, SMF, network entity (204) via the transceiver, information about the determined backhaul network to be used for control plane connection.

## Patentansprüche

1. Verfahren, das von einer Zugangs- und Verwaltungsfunktion (AMF)-Netzentität (203) in einem drahtlosen Kommunikationssystem durchgeführt wird, das in der Lage ist, eine Vielzahl von Backhaul-Netzen zu verwenden, wobei das Betriebsverfahren umfasst:
Empfangen einer Registrierungsanforderungsnachricht eines Benutzerendgerätes von einem Funkzugangsnetz (RAN);
Identifizieren eines von dem RAN für Steuerungsebenen-Verbindung verwendeten Backhaul-Netzes aus der Vielzahl von Backhaul-Netzen, basierend auf einem Transportnetzschicht (TNL)-Assoziationsbezeichner, durch den die Registrierungsanforderungsnachricht übertragen wird; und
Bestimmen eines für Steuerungsebenen-Verbindung zu verwendenden Backhaul- Netzes, basierend auf dem identifizierten Backhaul-Netz.

2. Verfahren nach Anspruch 1, wobei das Identifizieren des von dem RAN für Steuerungsebenen-Verbindung verwendeten Backhaul-Netzes Identifizieren des von dem RAN für Steuerungsebenen-Verbindung verwendeten Backhaul-Netzes basierend auf vorbestimmten Abbildungsinformationen zwischen dem TNL- Assoziationsbezeichner und dem Backhaul-Netz umfasst.

3. Verfahren nach Anspruch 1, wobei das Bestimmen des für Steuerungsebenen-Verbindung zu verwendenden Backhaul-Netzes Bestimmen umfasst, das von dem RAN für Steuerungsebenen-Verbindung verwendete Backhaul-Netz zu verwenden.

4. Verfahren nach Anspruch 1, wobei die Vielzahl von Backhaul-Netzen mindestens ein terrestrisches Netz und mindestens ein Satellitennetz umfassen.

5. Verfahren nach Anspruch 1, ferner umfassend das Übertragen von Informationen über das bestimmte, für Steuerungsebenen-Verbindung zu verwendende Backhaul-Netz an eine Sitzungsverwaltungsfunktion (SMF)-Netzentität (204).

6. Zugangs- und Verwaltungsfunktion (AMF)-Netzentität, umfassend:
einen Sende-Empfänger; und
einen Prozessor, der mit dem Sende-Empfänger gekoppelt und konfiguriert ist zum:
Empfangen einer Registrierungsanforderungsnachricht eines Benutzerendgeräts von einem Funkzugangsnetz (RAN) durch den Sende-Empfänger,
Identifizieren eines von dem RAN für Steuerungsebenen-Verbindung verwendeten Backhaul-Netzes aus der Vielzahl von Backhaul-Netzen, basierend auf einem Transportnetzschicht (TNL)-Assoziationsbezeichner, über den die Registrierungsanforderungsnachricht übertragen wird, und
Bestimmen eines für Steuerungsebenen-Verbindung zu verwendenden Backhaul-Netzes, basierend auf dem identifizierten Backhaul-Netz.

7. AMF nach Anspruch 6, wobei der Prozessor konfiguriert ist, das von dem RAN für Steuerungsebenen-Verbindung verwendete Backhaul-Netz basierend auf vorbestimmten Abbildungsinformationen zwischen dem TNL-Assoziationsbezeichner und dem Backhaul-Netz zu identifizieren.

8. AMF nach Anspruch 6, wobei der Prozessor konfiguriert ist, zu bestimmen, das von dem RAN für Steuerungsebenen-Verbindung verwendete Backhaul-Netz zu verwenden.

9. AMF nach Anspruch 6, wobei die Vielzahl von Backhaul-Netzen mindestens ein terrestrisches Netz und mindestens ein Satellitennetz umfassen.

10. AMF nach Anspruch 6, wobei der Prozessor konfiguriert ist, Informationen über das bestimmte, für Steuerungsebenen-Verbindung zu verwendende Backhaul-Netz an eine Sitzungsverwaltungsfunktion (SMF)-Netzentität (204) durch den Sende-Empfänger zu übertragen.

## Revendications

1. Procédé exécutée par une entité réseau de fonction d'accès et de gestion, AMF, (203), dans un système de communication sans fil permettant d'utiliser une pluralité de réseaux de liaison de retour, le procédé d'opération comprenant :
recevoir un message de demande d'enregistrement d'un terminal utilisateur, provenant d'un réseau d'accès radio, RAN ;
identifier un réseau de liaison de retour utilisé par le RAN pour une connexion de plan de commande parmi la pluralité de réseaux de liaison de retour, sur la base d'un identifiant d'association de couche de réseau de transport, TNL, par lequel le message de demande d'enregistrement est transmis ; et
déterminer un réseau de liaison de retour à utiliser pour la connexion de plan de commande, sur la base du réseau de liaison de retour identifié.

2. Procédé selon la revendication 1, dans lequel l'identification du réseau de liaison de retour utilisé par le RAN pour une connexion de plan de commande comprend : identifier le réseau de liaison de retour utilisé par le RAN pour la connexion de plan de commande, sur la base d'une information de mappage prédéterminée entre l'identifiant d'association TNL et le réseau de liaison de retour.

3. Procédé selon la revendication 1, dans lequel la détermination du réseau de liaison de retour à utiliser pour la connexion de plan de commande comprend : déterminer pour utiliser le réseau de liaison de retour utilisé par le RAN pour la connexion de plan de commande.

4. Procédé selon la revendication 1, dans lequel la pluralité de réseaux de liaison de retour comprend au moins un réseau terrestre et au moins un réseau satellite.

5. Procédé selon la revendication 1, comprenant en outre : émettre, à une entité réseau de fonction de gestion de session, SMF, (204), une information concernant le réseau de liaison de retour déterminé à utiliser pour la connexion de plan de commande.

6. Entité réseau de fonction d'accès et de gestion, AMF, comprenant :
un émetteur-récepteur ; et
un processeur couplé à l'émetteur-récepteur et configuré pour :
recevoir, par l'émetteur-récepteur, un message de demande d'enregistrement d'un terminal utilisateur, provenant d'un réseau d'accès radio, RAN,
identifier un réseau de liaison de retour utilisé par le RAN pour une connexion de plan de commande parmi la pluralité de réseaux de liaison de retour, sur la base d'un identifiant d'association de couche de réseau de transport, TNL, par lequel le message de demande d'enregistrement est transmis, et
déterminer un réseau de liaison de retour à utiliser pour la connexion de plan de commande, sur la base du réseau de liaison de retour identifié.

7. AMF selon la revendication 6, dans lequel le processeur est configuré pour identifier le réseau de liaison de retour utilisé par le RAN pour une connexion de plan de commande, sur la base d'une information de mappage prédéterminée entre l'identifiant d'association TNL et le réseau de liaison de retour.

8. AMF selon la revendication 6, dans lequel le processeur est configuré pour déterminer pour utiliser le réseau de liaison de retour utilisé par le RAN pour la connexion de plan de commande.

9. AMF selon la revendication 6, dans lequel la pluralité de réseaux de liaison de retour comprend au moins un réseau terrestre et au moins un réseau satellite.

10. AMF selon la revendication 6, dans lequel le processeur est configuré pour émettre, à une entité réseau de fonction de gestion de session, SMF, (204), une information concernant le réseau de liaison de retour déterminé à utiliser pour la connexion de plan de commande.
